# EUROPÄISCHE PATENTSCHRIFT

(11) **EP 2 746 193 B1**
(45) Veröffentlichungstag und Bekanntmachung des Hinweises auf die Patenterteilung: **14.09.2016**
(21) Anmeldenummer: 13199064.0
(22) Anmeldetag: 20.12.2013
(51) Int. Cl.: B65G 1/04, B66F 9/07

(54) **Regalfahrzeug, Regalbediengerät, Lager und entsprechendes Verfahren**
Vehicle for a warehouse, stacker crane, warehouse and corresponding method
Véhicule pour entrepôt, transstockeur, entrepôt et procédé correspondant

(30) Priorität: 22.03.2013 DE 102013102994; 20.12.2012 DE 102012112828
(43) Veröffentlichungstag der Anmeldung: 25.06.2014
(73) Patentinhaber: WITRON Logistik + Informatik GmbH, 92711 Parkstein (DE)
(72) Erfinder: Winkler, Walter, 92711 Parkstein (DE)
(74) Vertreter: Lang, Christian

(56) Entgegenhaltungen:
- EP-A2- 0 499 251
- EP-A2- 2 022 732
- DE-A1- 3 736 419
- DE-A1- 4 238 322
- DE-A1-102006 025 620
- DE-B- 1 076 036
- DE-U1- 7 708 142
- FR-A1- 2 121 850
- JP-A- S6 145 805
- US-A- 3 389 814
- US-A- 3 428 195
- US-A- 5 489 033

## Beschreibung

### GEBIET DER ERFINDUNG

Die vorliegende Erfindung betrifft ein Regalfahrzeug oder Regalbediengerät zum Ein- und Auslagern von Gegenständen in und aus einem Regal sowie ein Lager zur Aufbewahrung von Gegenständen mit mindestens zwei sich gegenüberstehenden Regalen und Regalfahrzeugen oder Regalbediengeräten, die in der Regalgasse zwischen den einander gegenüberstehenden Regalen verfahrbar sind.

### STAND DER TECHNIK

Automatisierte Lager, wie beispielsweise automatisierte Kleinteilelager (AKL) sind aus dem Stand der Technik bekannt. In derartigen Lagern werden eine Vielzahl von unterschiedlichen Gegenständen in Regalen mit einer Vielzahl von übereinander angeordneten Regalfachebenen und einer Vielzahl von in den Regalfachebenen nebeneinander angeordneten Regalfächern eingelagert und die Gegenstände werden automatisiert in dem Lager abgestellt und aus diesem wieder entnommen.

Hierzu werden Lagerbediengeräte, wie Regalfahrzeuge oder Regalbediengeräte eingesetzt, die in Regalgassen zwischen zwei sich gegenüberstehenden Regalen verfahrbar sind. An den Lagerbediengeräten ist jeweils ein Handhabungsmodul zur Handhabung der Gegenstände beim Ein- und Auslagern in oder aus den Regalfächern der Regale sowie zum Lagern der Gegenstände auf dem Lagerbediengerät während des Transports mit dem Lagerbediengerät vorgesehen. Das Handhabungsmodul ist beweglich an einer Führungsanordnung angeordnet, die senkrecht zur Bewegungsrichtung der Lagerbediengeräte entlang der Regalgassen ausgerichtet ist und eine Bewegung eines Handhabungsmoduls horizontal und vertikal in den Regalgassen ermöglicht. Somit kann durch eine geeignete Bewegung des Lagerbediengeräts und des Handhabungsmoduls an dem Lagerbediengerät jedes Regalfach der zur Lagergasse benachbarten Regale, angefahren und es können entsprechend Gegenstände eingelagert oder entnommen werden. Beispiele hierfür finden sich in den Dokumenten US 5,489,033 A, DE 42 38 322 A1 und FR 2 121 850 A3. Die DE 42 38 322 A1 offenbart ein Regalfahrzeug nach dem Oberbegriff des Anspruchs 1 und die FR 2 121 850 A3 offenbart ein Regalbediergerät nach dem Oberbegriff des Anspruchs 4. Weitere Beispiele sind aus der DE 77 08 142 U1 und EP 0 499 251 A2 bekannt.

Alternativ zu einem derartigen Lagerbediengerät sind weiterer Lagerbediengeräte in Form von sogenannten Shuttle-Systeme bekannt, bei denen in jeder Regalfachebene benachbarter Regale in der sich zwischen den Regalen ausbildenden Regalgasse Lagerbediengeräte, sogenannte Shuttles, unterwegs sind, um die Gegenstände aus den Regalfächern zu entnehmen oder in diese einzulagern. Derartige Shuttle sind auf eine bestimmte Regalfachebene fixiert und werden durch Aufzuganordnungen an den Stirnseiten der Regale mit den einzulagernden Gegenständen in den jeweiligen Ebenen versorgt oder die Gegenstände werden durch die Aufzugsanlagen aus den Regalfachebenen abtransportiert. Obwohl damit für die Bedienung des einzelnen Regalfachs bezogen auf die gesamte Anzahl von Regalfächern eines Regals mehr Handhabungsmodule in Form der Shuttle-Fahrzeuge vorhanden sind, wird die Bedienleistung durch die Aufzüge, die die Gegenstände in die entsprechenden Regalfachebenen zur Übergabe an die Shuttle-Fahrzeuge bringen müssen, und die zusätzlichen Übergabevorgänge zwischen Shuttle und Aufzug begrenzt.

Diesem Problem soll gemäß der DE 10 2011 012 424 B4 dadurch begegnet werden, dass zusätzliche Hubeinrichtungen, Pufferplätze und Querfördereinrichtungen im Regal vorgesehen werden. Zusätzlich werden Shuttle-Fahrzeuge vorgeschlagen, die seitlich an der Längsseite an einem Regal angeordnet sind, sodass in einer Regalebene an gegenüberliegenden Regalen jeweils ein Shuttle angeordnet sein kann, wobei ein Handhabungsmodul höhenverstellbar angeordnet sein kann, sodass die beiden Shuttle in einer Regalebene aneinander vorbeifahren können. Diese Lösung ist jedoch durch die zusätzlichen Hubeinrichtungen, Pufferplätze und Querfördereinrichtungen, die im Regal untergebracht werden müssen, nicht platzsparend und sehr aufwändig. Durch die einseitige Anordnung der Shuttle-Fahrzeuge an den Längsseiten der Regale treten an den Regalen hohe mechanische Belastungen auf und die Shuttle-Fahrzeuge werden durch die zusätzliche Hubfunktion ebenfalls aufwändig in der Herstellung ohne einen großen Leistungszuwachs zu bewirken.

### OFFENBARUNG DER ERFINDUNG

### AUFGABE DER ERFINDUNG

Es ist somit Aufgabe der vorliegenden Erfindung, ein automatisiertes Lager sowie entsprechende Lagerbediengeräte und ein Verfahren zum Betrieb eines derartigen Lagers bereitzustellen, die es ermöglichen, die Leistung bezüglich der Einlagerung und Auslagerung von Gegenständen zu erhöhen. Gleichzeitig sollen jedoch sowohl das Lager als auch die Lagerbediengeräte einfach aufgebaut und einfach herstellbar sowie zuverlässig bedienbar sein.

### TECHNISCHE LÖSUNG

Diese Aufgabe wird gelöst durch ein Regalfahrzeug mit den Merkmalen des Anspruchs 1 und ein Regalbediengerät mit den Merkmalen des Anspruchs 4 sowie ein Lager mit den Merkmalen des Anspruchs 12 und ein Verfahren zum Betrieb eines Lagers mit den Merkmalen des Anspruchs 17. Vorteilhafte Ausgestaltungen, sind Gegenstand der abhängigen Ansprüche.

Die Erfindung geht aus von der Idee, dass eine Leistungssteigerung bezüglich der Ein- und Auslagerung von Gegenständen in ein automatisiertes Lager dann erhöht werden kann, wenn Lagerbediengeräte bereitgestellt werden, die zusammen entlang einer Lagergasse verfahrbar sind und einander passieren können.

Nach einem ersten Aspekt der Erfindung, für den selbstständig und in Kombination mit anderen Aspekten der Erfindung Schutz begehrt wird, wird deshalb ein Regalfahrzeug zum Ein- und Auslagern von Gegenständen in und aus einem Regal vorgeschlagen, welches ein Fahrgestell und ein Handhabungsmodul aufweist. Das Fahrgestell dient zur Bewegung des Regalfahrzeugs entlang einer ersten Achse entlang der Regalfächer eines Regals. Das Handhabungsmodul dient zum Ein- und Auslagern von Gegenständen aus dem Regal und in das Regal sowie zur Lagerung der Gegenstände während des Transports der entsprechenden Gegenstände. Entsprechend kann es sich sowohl um Regalfahrzeuge oder Regalbediengeräte als auch Shuttle - Fahrzeuge handeln.

Das Handhabungsmodul weist eine Be- und Entladerichtung auf, entlang der die Gegenstände in die Regalfächer und aus den Regalfächern bewegt werden. Die Beund Entladerichtung ist während der Einlagerung von Gegenständen in ein Regalfach des Lageregals und der Entnahme von Gegenständen aus dem Regalfach quer zur ersten Achse angeordnet. Um eine einfache, platzsparende Möglichkeit zum Passieren von zwei benachbart in einer Regalgasse angeordneten Regalfahrzeugen zu schaffen, ist das Handhabungsmodul oder zumindest Teile davon in dem Fahrgestell verschwenkbar aufgenommen und zwar verschwenkbar um eine zweite Achse, die quer zur ersten Achse und quer zu einer dritten Achse ist, entlang der das Handhabungsmodul die Gegenstände aufnimmt und abgibt, sodass also die dritte Achse parallel zur Be- und Entladerichtung des Handhabungsmoduls ausgerichtet ist, wenn Gegenstände in das Regal eingelagert oder aus diesem ausgelagert werden. Die Verschwenkbarkeit des Handhabungsmoduls bzw. eines Teils davon ermöglicht somit, dass die Be- und Entladerichtung in einer ersten Position des Handhabungsmoduls entlang der ersten Achse ausgerichtet ist und in einer zweiten Position entlang der dritten Achse. Damit ist es möglich das Handhabungsmodul mit seiner Längsseite, die der Be- und Entladerichtung entspricht, einerseits parallel zur ersten Achse, also zur Bewegungsachse des Regalfahrzeugs in der Lagergasse auszurichten und es andererseits zum Be- und Entladevorgang quer zur Bewegungsrichtung entlang der ersten Achse auszurichten, um den Be- und Entladevorgang in und aus dem Regalfach zu ermöglichen. Damit kann das Regalfahrzeug insgesamt sehr schmal ausgebildet sein und gleichzeitig eine hohe Beladekapazität aufweisen, beispielsweise zwei oder mehrere Gegenstände auf der Lagerfläche des Handhabungsmoduls aufnehmen, die in einer Regalfachtiefe hintereinander gelagert werden können. Auf diese Weise ist es möglich in platzsparender Weise zwei Regalfahrzeuge in einer Gasse nebeneinander anzuordnen, sodass sich die Regalfahrzeuge in einer Gasse auf einer gleichen Ebene überholen oder passieren können. Dies ist vor allem dadurch möglich, weil das Handhabungsmodul bzw. die Lagerfläche so dimensioniert werden kann, dass das Handhabungsmodul bzw. die Lagerfläche entweder in einer Position oder Ausrichtung über die Fahrgestellbreite hervorsteht, während in der mindestens zweiten möglichen Position oder Ausrichtung maximal die Fahrgestellbreite beansprucht wird, oder dass das Handhabungsmodul bzw. Lagerfläche in einer Position oder Ausrichtung maximal der Fahrgestellbreite entspricht und in der mindestens zweiten Position oder Ausrichtung in Richtung der Fahrgestellbreite kleiner als die Fahrgestellbreite dimensioniert ist. Dies bezieht sich insbesondere bei unterschiedlich dimensionierbaren Handhabungsmodulen oder Lagerflächen auf einen Betriebszustand mit in der jeweiligen Richtung kleinsten möglichen Dimensionierung.

Entsprechend kann das Fahrgestell des Regalfahrzeugs eine Fahrgestellbreite aufweisen, die quer zur ersten Achse und quer zur zweiten Achse also der Drehachse des verschwenkbaren Handhabungsmoduls orientiert ist, welche im Wesentlichen der Breite des Handhabungsmoduls quer zur Be- und Entladerichtung entspricht. Im Wesentlich bedeutet hierbei, dass das Handhabungsmodul geringfügig schmaler oder breiter als, die Fahrgestellbreite sein kann, jedenfalls nicht exakt der Fahrgestellbreite entsprechen muss.

Dagegen kann die Länge des Handhabungsmoduls entlang der Be - und Entladerichtung sehr viel größer als die Breite des Handhabungsmoduls ausgebildet sein und insbesondere so bemessen sein, dass sie der Regalfachtiefe und auch der Breite der Regalgasse entspricht, sodass mehrere Gegenstände gleichzeitig aus einem Regalfach entnommen und in dieses eingebracht sowie von dem Regalfahrzeug transportiert werden können. Die Länge des Handhabungsmoduls ist somit lediglich durch die Breite der Regalgasse, die durch den Abstand der benachbarten Regale definiert ist, und die Regalfachtiefe limitiert.

Das Handhabungsmodul kann in dem Fahrgestell des Regalfahrzeugs entlang der zweiten Achse verfahrbar aufgenommen sein, sodass das Handhabungsmodul beliebige Regalfächer die in Spalten untereinander und in Reihen nebeneinander in den Regalen angeordnet sind, erreichen kann. Hierzu kann an dem Regalfahrzeug eine Führungsanordnung vorgesehen sein, entlang der das Handhabungsmodul entlang der zweiten Achse verfahrbar ist. Allerdings kann es sich bei dem Regalfahrzeug, wie bereits oben erwähnt, auch um ein sogenanntes Shuttle handeln, welches lediglich in einer Regalebene entlang der in einer Reihe nebeneinander angeordneten Regalfächer bewegbar ist, wobei in dem Regal dann entsprechend in den verschiedenen Regalebenen mehrere entsprechende Regalfahrzeuge angeordnet sein können. Allerdings ist die Anordnung von mehreren Regalfahrzeugen übereinander in verschiedenen Regalebenen auch für Regalfahrzeuge mit Führungsanordnungen, also Regalfahrzeuge mit einer Verfahrbarkeit der Handhabungsmodule senkrecht zur Bewegungsrichtung entlang der Regale in einer Regalebene (erste Achse) möglich, wie nachfolgend noch beschrieben wird.

Nach einem weiteren Aspekt der Erfindung, für den wiederum selbstständig und in Kombination mit anderen Aspekten der Erfindung Schutz begehrt wird, wird weiterhin ein Regalbediengerät zum Ein- und Auslagern von Gegenständen in und aus einem Regal vorgeschlagen, welches wiederum ein Fahrgestell und ein Handhabungsmodul aufweist, wobei das Regalbediengerät mittels des Fahrgestells entlang einer ersten Achse entlang des Regals verfahrbar ist und wobei mit dem Handhabungsmodul Gegenstände in das Regal eingelagert und aus dem Regal ausgelagert werden können sowie zum Transport aufgenommen werden können. Das Regalbediengerät weist mindestens ein Handhabungsmodul auf, das mit Hilfe einer Führungsanordnung über viele Regalfachebenen verfahren werden kann, wobei jedoch wiederum mindestens ein zweites Regalbediengerät in der gleichen Lagergasse platzsparend angeordnet werden kann, so dass sich die Regalbediengeräte gegenseitig überholen können oder bei gegenseitigem Verkehr einander passieren lassen können. Entgegen dem Regalbediengerät der DE 10 2011 012 424 B4, soll es sich jedoch um Regalbediengeräte handeln, die nicht nur an einer Längsseite eines Regals gelagert sind und somit eine hohe Belastung auf das Regal ausüben und deren Handhabungsmittel deshalb nur begrenzt über wenige Regalfachebenen verfahren werden können, sondern um Regalbediengeräte, bei denen die Handhabungsmittel in großen Bereichen über eine Vielzahl von Regalfacheberien Regalfächer des gesamten Regals bedienen können und zur besseren Lastabtragung auch Auflager aufweisen, von denen mindestens zwei entlang der Verfahrrichtung in der Regalgasse sowie wenigstens zwei quer dazu beabstandet sind. Das Regalbediengerät ist somit in mindestens einer durch den Abstand der Regale und deren Längsseite aufgespannte Ebene und/oder einer dazu parallelen Ebene gelagert und kann sich entlang dieser Ebene bewegen, wobei die Auflager an sich auch versetz in verschiedenen Ebenen in der Höhenrichtung des Regals angeordnet sein können. Durch die entsprechende Lagerung ist eine sichere Lastabtragung ohne übermäßige Belastung der Regale gewährleistet und durch die Überhol- und Passierfunktion können zwei Regalbediengeräte in einer Lagergasse verwendet werden, die weitgehend unabhängig voneinander verfahren werden können, sodass die Zugriffszeiten auf die einzelnen Regalfächer verkürzt und somit die Einlagerungs- und Auslagerungsleistung erhöht werden kann.

Die Regalbediengeräte können hierbei genauso wie die oben beschriebenen Regalfahrzeuge so ausgebildet sein, dass sie in der Regalgasse quer zur Fahrtrichtung zumindest teilweise nebeneinander angeordnet werden können, um ein gegenseitiges Passieren zu ermöglichen. Zumindest teilweise bedeutet hierbei, dass die Regalbediengeräte bzw. allgemein die Lagerbediengeräte, also die oben beschriebenen Regalfahrzeuge als auch die Regalbediengeräte nicht in ihrer Gesamtheit quer zur Fahrtrichtung nebeneinander in einer Lagergasse angeordnet werden müssen - auch wenn dies ebenfalls möglich ist - sondern dass nur Teile der Regalbediengeräte über der Breite einer Lagergasse nebeneinander anordenbar sein sollen.

Ein entsprechendes Lagerbediengerät kann nach einem weiteren Aspekt der vorliegenden Erfindung, für den selbstständig und in Kombination mit anderen Aspekten der Erfindung Schutz begehrt wird, als ein Regalbediengerät ausgebildet sein, das ein Fahrgestell zur Bewegung des Regalbediengeräts entlang der Lagergasse aufweist, welches eine Fahrgestellbasis mit einer Fahrgestellbreite in Richtung des Abstands der die Lagergasse bildenden Regale und eine Führungsanordnung umfasst, die exzentrisch zur Mitte der Fahrgestellbreite angeordnet ist.

Die Führungsanordnung, die an der Fahrgestellbasis angeordnet ist, dient zur Bewegung eines Handhabungsmoduls des Regalbediengeräts, mit welchem die Gegenstände in das Regal eingelagert und aus dem Regal ausgelagert und während des Transports auf dem Regalbediengerät gelagert werden können. Die Führungsanordnung für das Handhabungsmodul ist bei der vorgeschlagenen Gestaltung der Regalbediengeräte quer bzw. insbesondere senkrecht zur Fahrgestellbasis angeordnet. Dies bedeutet, dass die Längserstreckung, also die Ausdehnung der Führungsanordnung mit der größten Dimension entlang der zweiten Achse quer bzw. insbesondere senkrecht zu einer durch die Auflager des Fahrgestells definierten Lagerebene der Fahrgestellbasis angeordnet ist. Mit anderen Worten ist die Fahrgestellbasis mit ihren größten Dimensionen bzw. mit der Anordnung ihrer Auflager horizontal ausgerichtet und die Führungsanordnung für das Handhabungsmodul mit der Bewegungsrichtung für das Handhabungsmodul vertikal.

Um ein Passieren entsprechender Regalbediengeräte in einer Lagergasse zu ermöglichen, ist die Führungsanordnung auf der Fahrgestellbasis exzentrisch zur Mitte der Fahrgestellbreite angeordnet, und zwar bei zwei in einer Lagergasse gemeinsam arbeitenden Regalbediengeräten entsprechend in verschiedene Richtungen versetzt.

Die Fahrgestellbasis bzw. das Fahrgestell eines Regalfahrzeugs oder eines Regalbediengeräts kann mindestens drei Auflager, vorzugsweise mindestens vier Auflager aufweisen, mit denen das Regalfahrzeug oder das Regalbediengerät bzw. das Fahrgestell gelagert ist. Die Auflager können beispielsweise Laufrollen, Räder, aber auch Gleitelemente oder dergleichen sein. Die Fahrgestellbasis erstreckt sich im Wesentlichen in oder parallel zu einer Ebene, die durch die erste und dritte Achse aufgespannt ist, also in einer Ebene, die durch die Längsseite der Regale bzw. die Längsachse der Regalgasse und die Richtung quer dazu, also die Breite der Regalgasse definiert ist. Entsprechend können von den mindestens drei Auflagern mindestens zwei entlang der ersten Achse zueinander beabstandet sein und mindestens zwei entlang der dritten Achse zueinander beabstandet sein, sodass sich eine stabile, horizontale Lagerung des Fahrgestells bzw. der Fahrgestellbasis und somit des Regalbediengeräts ergibt. Durch die Stabilität des Regalfahrzeugs oder des Regalbediengeräts kann ein Schwingen oder Schwanken des Fahrzeugs oder Bediengeräts nach dem Abbremsen einer Bewegung vermieden werden, so dass unmittelbär nach dem Stopp des des Regalfahrzeugs oder Regalbediengräts die Handhabung von Gegenständen in den Regalfächern erfolgen kann. Dies kann zudem durch eine geeignete Steuerung bzw. Regelung der Bewegung der Regalfahrzeuge oder Regalbediengeräte unterstützt werden.

Durch die Auflager des Fahrgestells bzw. der Fahrgestellbasis wird eine Lagerebene des Fahrgestells bzw. der Fahrgestellbasis definiert, die parallel zu einer von der ersten und dritten Achse aufgespannten Ebene ist, also einer Ebene, die durch den horizontalen Abstand der Regale und die Längsseite der Regale entlang der Lagergasse definiert ist. Mit anderen Worten definieren die Auflager des Fahrgestells eine horizontale Lagerebene, wobei jedoch die Lagerebene maximal plus minus 45 ° zur Horizontalen geneigt sein kann, wenn beispielsweise die Auflager versetzt in verschiedenen Ebenen angeordnet sind. Gegenüber der seitlichen Lagerung der Shuttle-Fahrzeuge an den Regallängsseiten gemäß der DE 10 2011 012 424 B4 ergibt sich eine bessere Lastabtragung und eine geringere Belastung der Regale, sodass die Regale entsprechend schwächer dimensioniert werden können. Außerdem ergibt sich der Vorteil, dass in einfacher Weise die Auflager eines Lagerbediengeräts, also sowohl eines Regalfahrzeugs als auch eines Regalbediengeräts in den gegenüberliegenden Regalen bzw. dort dafür vorgesehenen Aufnahmen bzw. Schienenanordnungen angeordnet werden können.

Die Führungsanordnung des Regalfahrzeugs oder Regalbediengeräts kannso ausgebildet sein, dass sie sich nur über einen Teil, maximal über die Hälfte der Fahrgestellbreite erstreckt und in einer Hälfte der Fahrgestellbreite angeordnet ist, die am Rand des Fahrgestells liegt. Damit ist ein gegenseitiges Überholen und Passieren der Regalfahrzeuge oder Regalbediengeräte mit den Führungsanordnungen möglich, wenn das jeweilige Fahrgestelle so in der Lagergasse angeordnet ist, dass sich diese nicht gegenseitig behindern. Dies kann dadurch erreicht werden, wenn die Fahrgestelle oder Fahrgestellbasen der Regalfahrzeuge oder Regalbediengeräte in verschiedenen Ebenen der Regalgasse angeordnet sind. So kann ein Lagerbediengerät hängend mit dem Fahrgestell an einer Oberseite des Lagerbediengeräts und der Führungsanordnung nach unten ausgerichtet sein, während das mit diesem Lagerbediengerät in der gleichen Gasse zusammenwirkende weitere Lagerbediengerät das Fahrgestell an einer Unterseite des Lagerbediengeräts und die Führungsanordnung nach oben gerichtet aufweisen kann.

Damit können auch die Schienenanordnungen zur Führung der Lagerbediengeräte bei der Bewegung entlang der Lagergassen an den gegenüberstehenden Regalen angeordnet werden, da eines der Lagerbediengeräte hängend mit dem Fahrgestell an der Oberseite des Lagerbediengeräts in oberen Schienen eingehängt sein kann, während das andere Lagerbediengerät stehend mit dem Fahrgestell an der Unterseite des Lagerbediengeräts in unteren Schienen gelagert werden kann. Entsprechend kann sich bei jedem der Lagerbediengeräte das Fahrgestell über die gesamte Breite der Regalgasse erstrecken, ohne dass es bei einer Bewegung entlang der Regalgassen zu einer Kollision der Fahrgestelle kommen würde.

Zusätzlich zu den zwei Lagerbediengeräten, die sich gegenseitig überholen oder an einander vorbeifahren können, können zusätzliche Lagerbediengeräte in einer Lagergasse angeordnet werden, die nur einen Teil der anderen Lagerbediengeräte überholen oder passieren können und ansonsten mit den übrigen Lagerbediengeräten nur hintereinander verfahrbar sind. Vorzugsweise kann jeweils die Hälfte der in der Gasse betriebenen Lagerbediengeräte an der anderen Hälfte der Lagerbediengeräte vorbei fahren.

Neben mehreren Lagerbediengeräten entlang der Längserstreckung der Lagergasse können auch in einer Lagergasse mehrere Lagerbediengeräte übereinander in verschiedenen Ebenen oder nebeneinander in einer Ebene, insbesondere in parallelen Schienenanordnungen angeordnet sein.

Darüber hinaus kann die Arbeitshöhe der Lagerbediengeräte veränderbar ausgestaltet sein, indem die Führungsanordnung für ein Handhabungsmodul teleskopierbar ist.

Eine Teleskopierbarkeit der Führungsanordnungen der Lagerbediengeräte kann auch dafür verwendet werden, die Lagerbediengeräte in eine Passierstellung zu bringen, bei der die Lagerbediengeräte aneinander vorbeifahren können. Dies kann beispielsweise erforderlich sein, wenn sich die Führungsanordnung bis in den Bereich des Fahrgestells des korrespondierenden Lagerbediengeräts erstreckt. Bei einer Vorbeifahrt der Lagerbediengeräte kann dann durch die Teleskopierbarkeit der Führungsanordnung diese soweit verkürzt werden, dass keine Kollision mit dem Fahrgestell des anderen Lagerbediengeräts erfolgt.

Eine weitere Passierstellung zusätzlich zu der oben beschriebenen Verschwenkbarkeit des Handhabungsmoduls kann für das Handhabungsmodul vorgesehen werden, welches entlang einer Führungsanordnung verfahrbar ist. Dies ist beispielsweise erforderlich, wenn das Handhabungsmodul über die Führungsanordnung für das Handhabungsmodul dauerhaft hervorsteht, um eine große Aufnahmekapazität für zu transportierende Gegenstände bereit zu stellen, wobei z.B. auf die oben beschriebene Verschwenkbarkeit des Handhabungsmoduls verzichtet wird. In diesem Fall muss bei einem Vorbeifahren oder Überholen korrespondierender Regalbediengeräte das Handhabungsmodul in eine Position gebracht werden, in der es nicht mit dem vorbeifahrenden oder überholenden Regalbediengerät kollidiert. Dazu kann es entlang der Führungsanordnung beispielsweise in einen Bereich nahe des Fahrgestells verfahren werden. Eine derartige Passierstellung ist jedoch auch bei Lagerbediengeräten, die eine Verschwenkbarkeit des Handhabungsmoduls aufweisen, zusätzlich realisierbar.

### KURZBESCHREIBUNG DER FIGUREN

Die beigefügten Zeichnungen zeigen in rein schematischer Weise in
- Fig. 1: eine Draufsicht auf eine erste Ausführungsform eines erfindungsgemäßen Lagers;
- Fig. 2: eine Schnittansicht eines Teils des Lagers aus Figur 1;
- Fig. 3: eine Darstellung einer Ausführungsform eines erfindungsgemäßen Regalbediengeräts;
- Fig. 4: eine Schnittansicht einer weiteren Ausführungsform eines erfindungsgemäßen Lagers;
- Fig. 5: eine Schnittansicht durch noch eine Ausführungsform eines erfindungsgemäßen Lagers;
- Fig. 6: eine Schnittansicht durch noch eine Ausführungsform eines erfindungsgemäßen Lagers;
- Fig. 7: eine Draufsicht auf eine Lagergasse des Lagers aus Fig. 6; und in
- Fig. 8: eine weitere Draufsicht gemäß Fig. 7 mit einer Darstellung einer anderen Stellung des Handhabungsmoduls.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen der Erfindung deutlich, wobei die Erfindung nicht auf diese Ausführungsbeispiele beschränkt ist.

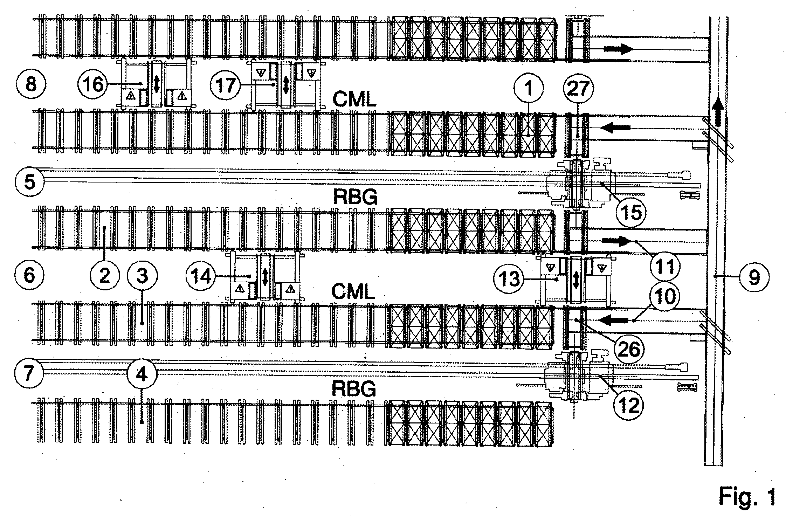

Die Figur 1 zeigt eine Draufsicht auf einen Teil eines erfindungsgemäßen automatisierten Lagers, welches mehrere Regale 1,2,3,4 aufweist, die mit Abstand zueinander angeordnet sind, um zwischen sich Regalgassen 5,6,7,8 zu bilden. In den Regalgassen sind einerseits konventionelle Regalfahrzeuge 12,15 und andererseits erfindungsgemäße Regalbediengeräte 13,14,16,17 vorgesehen, um Gegenstände in die Regale 1,2,3,4 einzulagern und aus ihnen wieder zu entnehmen. Hierzu übernehmen die Regalfahrzeuge 12,15 bzw. Regalbediengeräte die Gegenstände an Übergabestationen 26,27, wo die ein - oder auszulagernden Gegenstände über Fördereinrichtungen 9,10,11 hingeführt oder weggeführt werden. An den Übergabesfellen 26,27 werden die ein- bzw. auszulagernden Gegenstände von den Regalfahrzeugen 12,15 bzw. den Regalbediengeräten 13,14,16,17 auf das Handhabungsmodul der Regalfahrzeuge oder Regalbediengeräte übernommen oder von diesem abgegeben.

Beim Einlagern von Gegenständen in die Regale 1,2,3,4 fährt das entsprechende Regalfahrzeug 12,15 bzw. Regalbediengerät 13,14,16,17 an das vorbestimmte Regalfach, in dem der Gegenstand eingelagert werden soll, um dort mit dem Handhabungsmodul den Gegenstand in das Regalfach abzugeben. Beim Auslagern übernimmt das Regalfahrzeug 12,15 bzw. das Regalbediengerät 13,14,16,17 den Gegenstand mit dem Handhabungsmodul aus dem jeweiligen Regalfach und bringt ihn zu den Übergabestationen 26,27.

Zu diesem Zweck sind die Regalfahrzeuge 12, 15 und Regalbediengeräte 13,14,16,17 in den Regalgassen entlang einer ersten Achse, die der Längsachse der Regalgasse entspricht, bewegbar. Zudem weisen die Regalfahrzeuge 12, 15 und die Regalbediengeräte 13,14,16,17 bewegliche Handhabungsmittel auf, mit denen die Gegenstände in die Regalfächer abgelegt und aus den Regalfächern entnommen werden können. Das jeweilige Handhabungsmodul ist an den Regalfahrzeugen 12,15 bzw. Regalbediengeräten 13,14,16,17 in Richtung senkrecht zur Bildebene entlang einer zweiten Achse beweglich angeordnet, sodass in Richtung senkrecht zur Bildebene übereinander angeordneten Regalfächer bedient werden können.

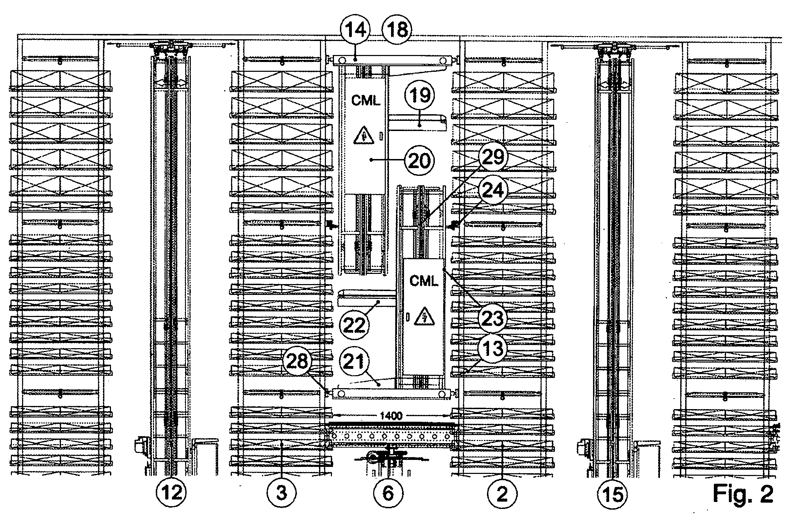

Für die erfindungsgemäßen Regalbediengeräte 13,14 ist dies in Figur 2 dargestellt. In der Figur 2 sind zwei verschiedenen Typen von Regalbediengeräten zu sehen, und zwar zum einen das Regalbediengerät 13 und zum anderen das Regalbediengerät 14. Das Regalbediengerät 13 umfasstein Fahrgestell mit einer Fahrgestellbasis 21 sowie einer Führungsanordnung 23, die auf der Fahrgestellbasis 21 angeordnet ist. An der Führungsanordnung 23 ist ein Handhabungsmodul 22 verfahrbar angeordnet, und zwar entlang der zweiten Achse verfahrbar, die der Höhenrichtung der Regale 2,3 entspricht. Aufgrund der Verfahrbarkeit des Fahrgestells mit der Fahrgestellbasis 21 entlang der ersten Achse und der Verfahrbarkeit des Handhabungsmoduls 22 entlang der zweiten Achse, ist jedes der Regalfächer in den Regalen 2,3, die übereinander und nebeneinander angeordnet sind, mit dem Regalbediengerät 13 erreichbar und über das Handhabungsmodul 22 bedienbar, welches die Gegenstände entnehmen und ablegen sowie während des Transports lagern kann. Hierzu kann das Handhabungsmodul in jeder geeigneten Weise ausgebildet sein.

Das Regalbediengerät 14 ist ähnlich dem Regalbediengerät 13 aufgebaut, jedoch mit dem Unterschied, dass das Regalbediengerät 14 nicht stehend, sondern hängend angeordnet ist. Entsprechend ist die Fahrgestellbasis 18 an der Oberseite vorgesehen und die Führungsanordnung 20 für das Handhabungsmodul 19 ist, ausgehend von der Fahrgestellbasis 18, nach unten gerichtet. Das Handhabungsmodul 19 kann wiederum entlang einer zweiten Achse, die der Höhenrichtung der Regale 2,3 entspricht, an der Führungsanordnung 20 verfahren werden, sodass die verschiedenen Regalfächer der Regale 2,3 erreichbar und bedienbar sind.

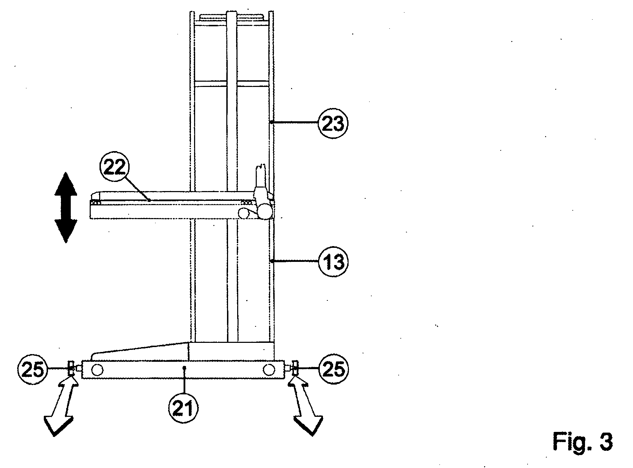

Die jeweilige Fahrgestellbasis 18,21 der Regalbediengeräte 14,13 weist Räder 25 (siehe Figur 3) auf, die in Schienenanordnungen 28, die an den Regalen 2,3 angeordnet sind, aufgenommen sind. Die Fahrgestellbasis 18,21 der Regalbediengeräte 13,14 erstreckt sich über die gesamte Lagergassenbreite, sodass jeweils eine Schiene der Schienenanordnung 28 an einem der Regale 2 bzw. 3 angeordnet ist. Dadurch ergibt sich eine einfache Lagerung der Regalbediengeräte 13,14 bzw. Ausbildung einer Bewegungseinrichtung für die Regalbediengeräte 13,14. Zwar wäre es auch denkbar, dass die Fahrgestellbasis 18, 21 der Regalbediengeräte 14,13 sich nicht über die gesamte Regalgassenbreite erstreckt, sondern lediglich bis maximal zur Hälfte der Regalgassenbreite, jedoch wird in diesem Fall die Lagerung und Anordnung der Schienenanordnung für die Regalbediengeräte 13,14 komplizierter und aufwändiger.

Neben der hier beschriebenen Ausgestaltung der Bewegungseinrichtung für die Regalbediengeräte 13,14 mit Rollen bzw. Rädern an der Fahrgestellbasis und Vorsehen von Führungsschienen, in denen sich die Räder 25 bewegen können, sind auch andere Gestaltungen mit Gleitkufen oder dergleichen denkbar.

Wie in Figur 2 zu erkennen ist, erstrecken sich die Führungsanordnungen 20,23 der Regalbediengeräte 13,14 nicht über die gesamte Höhe der Regale 2,3, sodass nicht jedes Regalfach der Regale 2 oder 3 durch jedes der Regalbediengeräte 13,14 erreichbar ist. Zwar gibt es einen Überlappungsbereich, in dem beide Regalbediengeräte 13,14 die entsprechenden Regalfächer der Regale 2,3 bedienen können, aber es gibt zusätzlich einen oberen und einen unteren Bereich, der jeweils nur von einem der Regalbediengeräte 13,14 bedient werden kann. Um dies zu minimieren, kann der Überlappungsbereich 29 größer ausgebildet sein, also die entsprechenden Führungsanordnungen 20,23 für die Handhabungsmodule 19,22 können entsprechend länger ausgeführt werden, um eine größere Höhe der Regale 2,3 zu überdecken. Insbesondere ist es auch möglich, die Führungsanordnungen 20,23 teleskopierbar auszuführen, sodass je nach Bedarf eine größere Höhe der Regale 2,3 abgedeckt wird und jedes Regalbediengerät alle Regalfächer erreichen kann. Insbesondere können die Führungsanordnungen auch bis in den Bewegungsbereich der Fahrgestellbasis eines korrespondierenden Regalbediengeräts telekopierbar sein.

Wie sich aus der Figur 2 ergibt, sind die Führungsanordnungen 20,23 an den jeweiligen Fahrgestellbasen 18,21 exzentrisch angeordnet, und zwar insbesondere versetzt in eine Hälfte der Fahrgestellbreite, die jeweils an einem Rand der Fahrgestellbasis 18,21 liegt, sodass die Regalbediengeräte 13,14 im gegenseitigen Überlappungsbereich 29 aneinander vorbei fahren können bzw. sich überholen können. Um ein Passieren der Regalbediengeräte 13 und 14 gegenseitig zu ermöglichen, ist die Führungsanordnung 20 gemäß der Darstellung der Figur 2 in der linken Hälfte der Fahrgestellbasis 18 angeordnet, während die Führungsanordnung 23 des Regalbediengeräts 13 in der rechten Hälfte der Fahrgestellbasis 21 angeordnet ist. Da sich somit die Führungsanordnungen 20,23 jeweils nur maximal über die Hälfte der Fahrgestellbasis bzw. der Fahrgestellbreite erstrecken und insbesondere noch etwas kleiner dimensioniert sind, um Bewegungsspalte zwischen den Regalen 2,3 und den Regalbediengeräte 13,14 zu realisieren, ist ein Vorbeifahren der Regalbediengeräte 13 und 14 gegenseitig möglich, sodass die Regalbediengeräte 13,14 jeweils unabhängig voneinander jeweils die gesamte Länge der Regale 2,3 entlang der Verfahrachse (erste Achse) der Fahrgestelle der Regalbediengeräte 13,14 bedienen können.

Bei dem gezeigten Ausführungsbeispiel der Figur 2 sind die Regalbediengeräte 13,14 weiterhin so ausgebildet, dass sie jeweils sowohl das Regal 2, als auch das Regal 3 bedienen können. Zudem sind die Handhabungsmodule 19,22 so gestaltet, dass sie sämtliche Gegenstände in der gesamten Regalfachtiefe aufnehmen können, sodass sich die Erstreckung der Handhabungsmodule 19,22 in Richtung der Fahrgestellbreite (dritte Achse) durch die Regalfachtiefe und die Lagergassenbreite der Lagergasse 6 ergibt. Dadurch stehen die Handhabungsmodule 19,22 jedoch über die Führungsanordnungen 20,23 in Richtung des jeweils anderen Regalbediengeräts über, sodass die Regalbediengeräte 13 und 14 beim Überholen oder Vorbeifahren in eine Passierstellung gebracht werden müssen, bei der die Handhabungsmodule 19,22 in eine Position oberhalb öder unterhalb der Führungsanordnung 20,23 des jeweils anderen Regalbediengeräts gebracht werden müssen.

Die Figur 3 zeigt das Regalbediengerät 13 alleine in einer schematischen Darstellung, wobei zu erkennen ist, dass das Regalbediengerät 13 ein Fahrgestell, bestehend aus einer Fahrgestellbasis 21 und einer Führungsanordnung 23, aufweist. Das Fahrgestell weist an der Farhgestellbasis 21 Räder bzw. Führungsrollen 25 auf, die in einer entsprechenden Schienenanordnung 28 an den Regalen oder dem Boden eines entsprechenden Lagers aufgenommen sind. Mittels der Räder 25 kann das Regalbediengerät 13 entlang einer ersten Achse bewegt werden, die durch einen Doppelpfeil neben dem in der Figur 3 links dargestellten Rad 25 verdeutlicht ist und bei der Darstellung der Figur 3 senkrecht zur Bildebene verläuft.

Die Fahrgestellbreite ist bei dem Regalbediengerät 13 der Figur 3 durch die Erstreckung der Fahrgestellbasis 21 von der linken zur rechten Bildseite bzw. umgekehrt und die entsprechenden Führungsrollen 25 definiert. Die Fahrgestellbreite erstreckt sich somit entlang einer dritten Achse.

An der Führungsanordnung 23 ist ein Handhabungsmodul 22 vorgesehen, das sich entlang einer zweiten Achse bewegen kann, die mit Hilfe des Doppelpfeils neben dem Handhabungsmodul 22 in der Figur 3 dargestellt ist und sich in der Bildebene befindet. Das Handhabungsmodul 22 kann ein Greifarm mit einer Ablageplatte oder eine Förderbandanordnung oder eine andere Gestaltung sein, mit der Gegenstände aus einem Regalfach entnommen und in ein Regalfach eingelagert werden können und auf dem Regalfahrzeug 13 während des Transports gelagert werden können. Die Gegenstände werden entlang einer dritten Achse, die der Richtung der Fahrgestellbreite entspricht, aus den Regalfächern entnommen und in diese eingelagert, sodass also die dritte Achse in der Bildebene in der Figur 3 von links nach rechts oder umgekehrt verläuft.

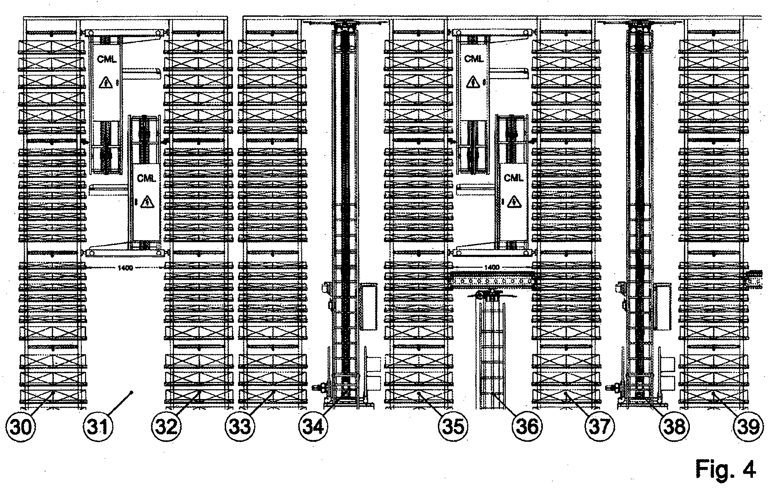

Die Figur 4 zeigt eine weitere Ausführungsform des erfindungsgemäßen Lagers mit Regalen 30,32,33,35,37,39 und Regalgassen 31,34,36 und 38. Während beispielsweise zwischen den Regalgassen 34 und 36 lediglich ein einzelnes Regal 35 angeordnet ist, sind zwischen den Regalgassen 31 und 34 zwei Regale 32 und 33 angeordnet. Die Regale 32 und 33 können jeweils nur von einer Seite bedient werden, während das Regal 35 oder auch das Regal 37 von zwei Seiten, also von zwei Regalgassen 34,36 bzw. 36 und 38 bedient werden kann. Dies erhöht die Sicherheit gegen einen Ausfall, da selbst wenn ein Regalfahrzeug bzw. Regalbediengerät in einer Gasse ausfallen sollte, das Regalfahrzeug bzw. Regalbediengerät in der anderen, zu dem Regal benachbarten Gasse, dieses Regal bedienen kann. Durch die Anordnung von zwei der mehreren Regalbediengeräten, von denen sich jeweils zwei gegenseitig überholen oder aneinander vorbeifahren können, wird ebenfalls die Ausfallsicherheit erhöht, da jedes der Regalbediengeräte im Idealfall sämtliche Regalfächer der an der Lagergasse benachbarten Regale bedienen kann. Entsprechend können in diesem Fall auch zwei Regale benachbart zueinander angeordnet werden.

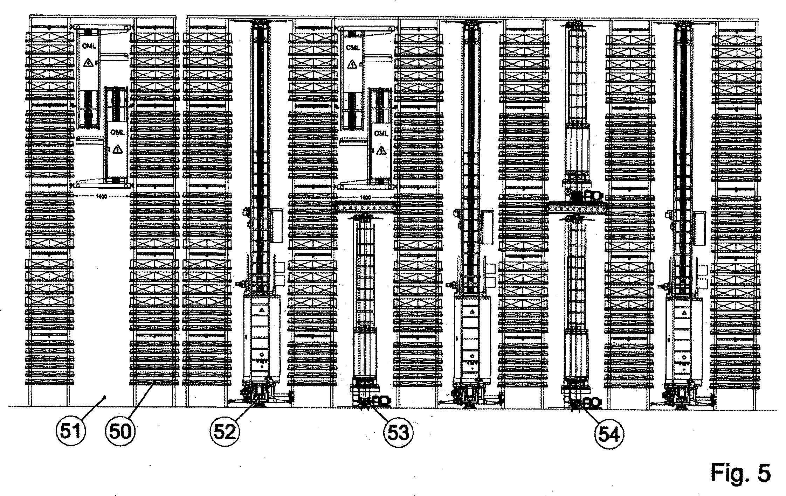

Die Figur 5 zeigt eine weitere Ausführungsform eines erfindungsgemäßen Lagers, bei welchem wiederum eine Vielzahl von Regalen 50 und Regalgassen 51 vorgesehen sind. In den verschiedenen Regalgassen sind verschiedenen Kombinationen von Regalfahrzeugen und Regalbediengeräten verwirklicht. Während beispielswiese in der Regalgasse 52 eine konventionelles Regalfahrzeug angeordnet ist, welches die benachbarten Regale über die gesamte Höhe und Länge bedienen kann, sind in der Regalgasse 53 übereinander erfindungsgemäße Regalbediengeräte mit einem Regalfahrzeug kombiniert, wobei im oberen Bereich der Regalgasse erfindungsgemäße Regalbediengeräte angeordnet sind, während im unteren Bereich der Regalgasse ein konventionelles Regalfahrzeug vorgesehen ist. In der Regalgasse 54 sind wiederum zwei konventionelle Regalfahrzeuge übereinander in zwei Ebenen vorgesehen.

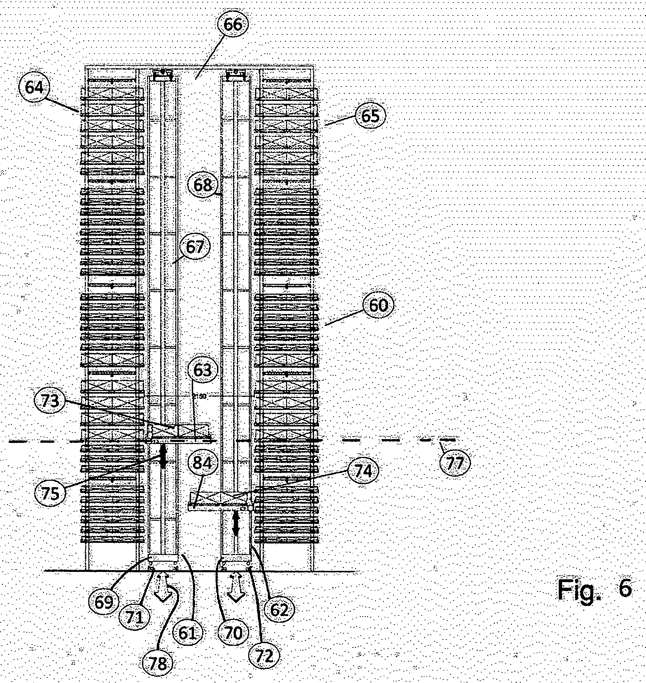

Die Fig. 6 zeigt einen Schnitt durch ein Lager 60 mit zwei Regalen 64 und 65, die beabstandet zueinander angeordnet sind und zwischen sich eine Regalgasse 66 einschließen. In der Regalgasse 66 sind zwei Regalfahrzeuge 61 und 62 in Richtung des Abstands der gegenüber liegenden Regale nebeneinander angeordnet, sodass sie entlang der entsprechenden Regale 64, 65 verfahren werden können. Hierzu sind die Regalfahrzeuge 61, 62 auf zwei parallel zueinander angeordneten Schienenanordnungen 71 und 72 vorgesehen, wobei die Fahrgestelle 69, 70 der Regalfahrzeuge 61, 62 mit entsprechenden Rollen oder Rädern in den Schienenanordnungen 71, 72 aufgenommen sind.

Die Regalfahrzeuge 61, 62 weisen jeweils eine Führungsanordnung 67, 68 auf, an denen jeweils ein Handhabungsmodul 63, 84 angeordnet ist, welches entsprechend der dargestellten Doppelpfeile 75 entlang der Führungsanordnungen 67, 68 verfahrbar ist. Die Richtung entlang der Doppelpfeile 75 entspricht der zweiten Achse, während die gestrichelte Linie 77 die dritte Achse darstellt, entlang der die Gegenstände 73, 74 auf den Handhabungsmodulen 63, 84 in die Regalfächer der Regale 64, 65 hinein oder heraus bewegt werden. Die erste Achse ist durch die Doppelpfeile 78 repräsentiert und entspricht einer Bewegung senkrecht zur Blattebene entlang der Schienenanordnungen 71, 72.

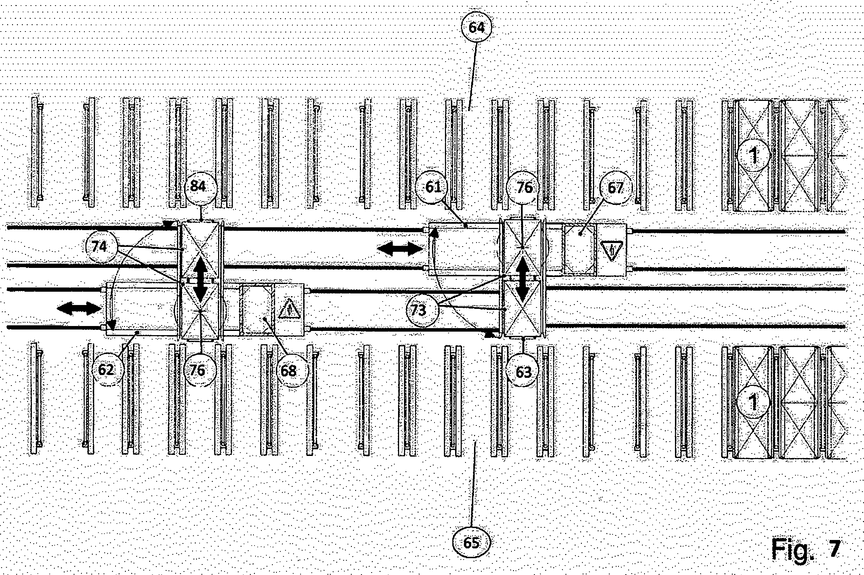

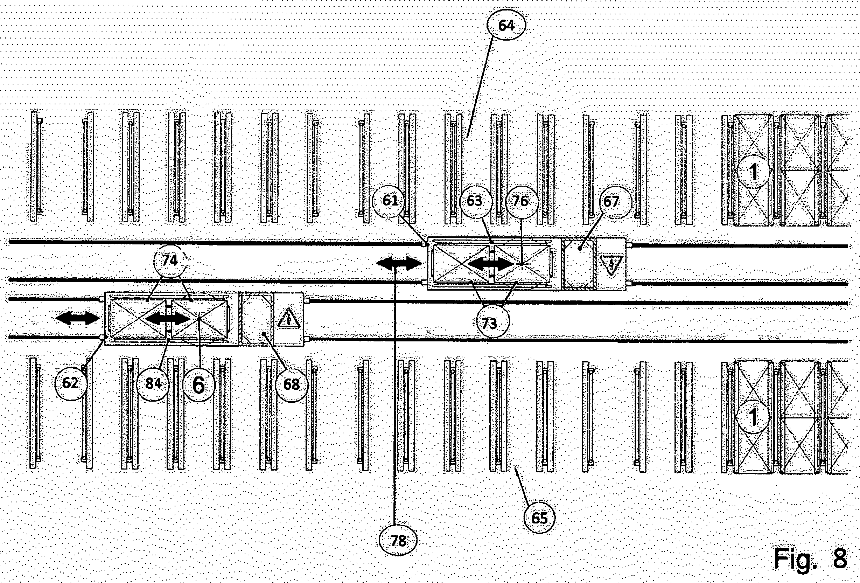

Wie insbesondere in den Fig. 7 und 8 dargestellt, sind die Handhabungsmodule 63, 84 der Regalfahrzeuge 61, 62 um eine Drehachse 76 schwenkbar in den Regalfahrzeugen 61, 62 aufgenommen, sodass sie von einer Position, in der eine Be- und Entladung der Regale 64, 65 möglich ist (siehe Fig. 7) in eine Position parallel zur ersten Achse entsprechend der Doppelpfeile 78 verschwenkt werden können (siehe Fig. 8). In der Draufsicht der Fig. 7 und 8 ist somit gut erkennbar, dass bei einer parallelen Ausrichtung der Be- und Entladerichtung bzw. der Längsrichtung der Handhabungsmodule 63, 84 mit der ersten Achse ein Passieren der Regalfahrzeuge 61, 62 in der Regalgasse 66 möglich ist, während bei einer Position der Handhabungsmodule 63, 84 entsprechend der Fig. 7 zum Be- und Entladen der Regalfächer die Handhabungsmodule im Wesentlichen die gesamte Breite der Regalgasse 66 einnehmen und so die Güter 73, 74, die hintereinander entsprechend der Regaltiefe der Regale 64, 65 auf den Handhabungsmodulen 63, 84 angeordnet sind, in die Regalfächer eingeführt oder aus diesen entnommen werden können.

Obwohl die Regalfahrzeuge in den Fig. 6 bis 8 mit jeweils einer Führungsanordnung 67, 68 dargestellt sind, die ein Erreichen sämtlicher Regalfächer der Regale 64, 65 über verschiedene Regalebenen hinweg ermöglicht, ist es auch möglich die Regalfahrzeuge als sogenannte Shuttle auszuführen, die sich lediglich in einer Regalebene bewegen und nur die Regalfächer erreichen, die in einer Regalebene nebeneinander angeordnet sind.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die Offenbarung der vorliegenden Erfindung umfasst sämtlich Kombinationen der vorgestellten Einzelmerkmale.

## Patentansprüche

1. Regalfahrzeug zum Ein- und Auslagern von Gegenständen in und aus einem Regal, welches ein Fahrgestell (69,70) und ein Handhabungsmodul (63,84) aufweist, wobei das Regalfahrzeug (12,15, 61,62) mittels des Fahrgestells entlang einer ersten Achse verfahrbar ist und wobei mit dem Handhabungsmodul entlang einer Be - und Entladerichtung des Handhabungsmoduls Gegenstände in das Regal (2,3) eingelagert und aus dem Regal ausgelagert werden können und zum Transport aufgenommen werden können, wobei
das Handhabungsmodul (63,84) in dem Fahrgestell (69,70) zumindest teilweise verschwenkbar aufgenommen ist und um eine zweite Achse verschwenkbar ist, die quer zur ersten Achse und quer zu einer dritten Achse ist, entlang der das Handhabungsmodul die Gegenstände aufnimmt und abgibt, so dass das Handhabungsmodul(63,84) mit seiner Be - und Entladerichtung zwischen einer Position, in der es entlang der ersten Achse ausgerichtet ist und mindestens einer zweiten Position, in der es entlang der dritten Achse ausgerichtet ist, verschwenkbar ist, wobei das Fahrgestell (69,70) eine Fahrgestellbreite quer zur ersten Achse und quer zur zweiten Achse aufweist und das Handhabungsmodul eine Breite quer zur Be - und Entladerichtung und eine Länge entlang der Be - und Entladerichtung aufweist, **dadurch gekennzeichnet, dass** das Handhabungsmodul(63,84) so ausgebildet ist, dass entweder die Länge des Handhabungsmoduls bei einer Ausrichtung der Länge entlang der dritten Achse in jedem Betriebszustand über der Fahrgestellbreite hervorsteht, während in der mindestens einen zweiten möglichen Position oder Ausrichtung maximal die Fahrgestellbreite beansprucht wird, oder dass das Handhabungsmodul (63,84) in einer Position oder Ausrichtung der Fahrgestellbreite entspricht und dass die Breite oder Länge des Handhabungsmoduls (63,84) in der mindestens einen zweiten Position oder Ausrichtung in Richtung der Fahrgestellbreite kleiner als die Fahrgestellbreite dimensioniert ist.

2. Regalfahrzeug nach Anspruch 1,
**dadurch gekennzeichnet, dass**
die Breite des Handhabungsmoduls (63,84) im Wesentlichen der Fahrgestellbreite entspricht.

3. Regalfahrzeug nach einem der vorhergehenden Ansprüche,
**dadurch gekennzeichnet, dass**
das Handhabungsmodul (63,84) in dem Fahrgestell entlang der zweiten Achse verfahrbar aufgenommen ist, so dass das Handhabungsmodul (63,84) beliebige Orte einer durch die erste und zweite Achse aufgespannten Fläche erreichen kann, und wobei das Fahrgestell eine Führungsanordnung (67,68) umfasst, entlang der das Handhabungsmodul in dem Fahrgestell (69,70) entlang der zweiten Achse verfahrbar ist.

4. Regalbediengerät zum Ein- und Auslagern von Gegenständen in und aus einem Regal, welches ein Fahrgestell (18,20;21,23) und ein Handhabungsmodul (19,22) aufweist, wobei das Regalbediengerät mittels des Fahrgestells entlang einer ersten Achse verfahrbar ist und wobei mit dem Handhabungsmodul Gegenstände in das Regal (2,3) eingelagert und aus dem Regal ausgelagert werden können und zum Transport aufgenommen werden können, und wobei das Handhabungsmodul in dem Fahrgestell verfahrbar aufgenommen ist und entlang einer zweiten Achse verfahrbar ist, die quer zur ersten Achse und quer zu einer dritten Achse ist, entlang der das Handhabungsmodul die Gegenstände aufnimmt und abgibt, so dass das Handhabungsmodul beliebige Orte einer durch die erste und zweite Achse aufgespannten Fläche erreichen kann, wobei das Fahrgestell eine Fahrgestellbasis (18,21) und eine Führungsanordnung (20,23) umfasst, entlang der das Handhabungsmodul in dem Fahrgestell entlang der zweiten Achse verfahrbar ist, und wobei die Fahrgestellbasis zum Verfahren entlang der ersten Achse dient und eine Fahrgestellbreite quer zur ersten Achse und quer zur zweiten Achse aufweist,
**dadurch gekennzeichnet, dass**
die Führungsanordnung exzentrisch zur Mitte der Fahrgestellbreite festander Fahrgestellbasis angeordnet und teleskopierbar ist.

5. Regalbediengerät nach Anspruch 4 oder Regalfahrzeug nach Anspruch 3,
**dadurch gekennzeichnet, dass**
die Führungsanordnung (20,23;67,68) sich nur über einen Teil der Fahrgestellbreite, insbesondere maximal über die Hälfte der Fahrgestellbreite erstreckt und/oder dass die Führungsanordnung (20,23;67,68) in einer Hälfte des Fahrgestells bezüglich der Fahrgestellbreite angeordnet ist, die am Rand des Fahrgestells liegt.

6. Regalfahrzeug nach einem der Ansprüche 3 oder 5,
**dadurch gekennzeichnet, dass**
die Führungsanordnung (20,23;67,68) teleskopierbar ist.

7. Regalbediengerät nach einem der Ansprüche 4 bis 5,
**dadurch gekennzeichnet, dass**
das Handhabungsmodul (19,22) in dem Fahrgestell (18,20;21,23.) zumindest teilweise verschwenkbar aufgenommen ist und um eine zweite Achse verschwenkbar ist, die quer zur ersten Achse und quer zu einer dritten Achse ist, entlang der das Handhabungsmodul die Gegenstände aufnimmt und abgibt, so dass das Handhabungsmodul mit seiner Be - und Entladerichtung zwischen einer Position, in der es entlang der ersten Achse ausgerichtet ist und einer Position, in der es entlang der dritten Achse ausgerichtet ist, verschwenkbar ist.

8. Regalfahrzeug nach einem der Ansprüche 1 bis 3 oder 5 bis 6 oder Regalbediengerät nach einem der Ansprüche 4 bis 5 oder 7,
**dadurch gekennzeichnet, dass** die Fahrgestellbasis bzw.
das Fahrgestell (18,20;69,70) eine rahmen - oder plattenförmige Konstruktion aufweist, die sich in ihren größten Dimensionen im Wesentlichen parallel zu einer.durch die erste und die dritte Achse aufgespannten Ebene erstreckt und/oder Auflager insbesondere in Form von Laufrädern aufweist, von denen mindestens zwei jeweils zueinander entlang der ersten und/oder dritten Achse beabstandet sind.

9. Regalfahrzeug nach Anspruch 3 oder 5 bis 6 oder 8 oder Regalbediengerät nach einem der Ansprüche 4 bis 5 oder 7 bis 8,
**dadurch gekennzeichnet, dass**
die Führungsanordnung (20,23;67,68) mit ihrer größten Dimension entlang der zweiten Achse quer zur Fahrgestellbasis und insbesondere quer zu einer von Auflagern an der Fahrgestellbasis aufgespannten Ebene angeordnet ist.

10. Regalfahrzeug nach einem der Ansprüche 1 bis 3 oder 5 bis 6 oder 8 bis 9 oder Regalbediengerät nach einem der Ansprüche 4 bis 5 oder 7 bis 9,
**dadurch gekennzeichnet, dass** die Fahrgestellbasis bzw.
das Fahrgestell (18,20;69,70) mindestens drei Auflager aufweist, von denen mindestens zwei entlang der ersten Achse und mindestens zwei entlang der dritten Achse beabstandet sind und/oder die eine Lagerebene definieren, die parallel zu einer von der ersten und der dritten Achse aufgespannten Ebene ist oder gegenüber dieser um maximal ± 45° geneigt ist.

11. Regalfahrzeug nach einem der Ansprüche 1 bis 3 oder 5 bis 6 oder 8 bis 10 oder Regalbediengerät nach einem der Ansprüche 4 bis 5 oder 7 bis 10,
**dadurch gekennzeichnet, dass**
das Handhabungsmodul (19,22;63,84) in Richtung der Fahrgestellbreite über die Führungsanordnung hervorsteht oder hervorstehen kann.

12. Lager zur Aufbewahrung von Gegenständen mit mindestens zwei sich einander gegenüber stehenden Regalen (2,3), die zwischen sich eine Regalgasse (6) ausbilden, und mit mindestens zwei Regalfahrzeugen oder Regalbediengeräten (13,14) zum Ein- und Auslagern von Gegenständen in und aus den Regalen, wobei das oder die Regalfahrzeuge nach einem der Ansprüche 1 bis 3 oder 5 bis 6 öder 8 bis 11 und das oder die Regalbediengeräte nach einem der Ansprüche 4 bis 5 oder 7 bis 11 ausgebildet sind, wobei die Regalfahrzeuge oder Regalbediengeräte in mindestens einer durch den Abstand der Regale und deren Längsseite aufgespannten Ebene und/oder einer dazu parallelen Ebene gelagert sind und sich entlang dieser in der Regalgasse bewegen können,
wobei zwei Regalfahrzeuge oder Regalbediengeräte in der Regalgasse aneinander vorbei fahren können, wobei sie in Richtung der Breite der Lagergasse, die durch den Abstand der sich gegenüber stehenden.Regale definiert ist, so ausgebildet sind, dass sie zumindest teilweise nebeneinander angeordnet werden können.

13. Lager nach Anspruch 12,
**dadurch gekennzeichnet, dass**
die Regalbediengeräte (13,14) in Schienenanordnungen (28) verfahrbar sind, von denen jeweils eine Schiene an einem der gegenüber stehenden Regale (2,3) angeordnet ist und/oder dass
jeweils ein Regalbediengerät (14) hängend mit einer Fahrgestellbasis an der Oberseite des Fahrgestells und ein Regalbediengerät (13) stehend mit einer Fahrgestellbasis an der Unterseite des Fahrgestells vorgesehen sind.

14. Lager nach einem der Ansprüche 12 oder 13,
**dadurch gekennzeichnet, dass**
das Regalfahrzeug oder das Regalbediengerät (13,14) jedes der beiden gegenüber stehenden Regale (2,3) bedienen kann und/oder dass das Regalfahrzeug oder das Regalbediengerät (13,14) Gegenstände in der gesamten Regalfachtiefe aufnehmen kann.

15. Lager nach einem der Ansprüche 12 bis 14,
**dadurch gekennzeichnet, dass**
ein Regal (2,3) von Regalfahrzeugen oder Regalbediengeräten (13,14) von zwei Regalseiten bedient werden kann und/oder dass mehrere Regalfahrzeuge oder Regalbediengeräte (13,14) in einer Lagergasse übereinander angeordnet sind.

16. Lager nach einem der Ansprüche 12 bis 15,
**dadurch gekennzeichnet, dass**
ein Regal (2,3) eine Vielzahl von Regalfächern aufweist, die nebeneinander in Regalfachebenen angeordnet sind, wobei mehrere Regalfachebenen übereinander angeordnet sind, wobei ein Regalfahrzeug oder Regalbediengerät (13,14) Regalfächer in mehr als 5, vorzugsweise mehr als 10, insbesondere mehr als 20 Regalfachebenen bedienen kann und/oder Regalfächer in einem Bereich von mehr als der Hälfte der Regalhöhe, insbesondere mehr als 75 % der Regalhöhe, vorzugsweise über die gesamte Regalhöhe bedienen kann.

17. Verfahren zum Betrieb eines Lagers, insbesondere eines Lagers nach einem der Ansprüche 12 bis 16, mit mindestens zwei Regalen (2,3), die sich einander gegenüber stehen und zwischen sich eine Regalgasse (6) ausbilden, wobei bei dem Verfahren Gegenstände mit mindestens zwei Regalfahrzeugen nach einem der Ansprüche 1 bis 3 oder 5 bis 6 oder 8 bis 11 und/oder mindestens zwei Regalbediengeräten (13,14) nach einem der Ansprüche 4 bis 5 oder 7 bis 11, in ein Regal ein - und ausgelagert werden, wobei die Regalfahrzeuge oder Regalbediengäräte (13,14) in mindestens einer durch den Abstand der Regale und deren Längsseite aufgespannten Ebene und/oder einer dazu parallelen Ebene gelagert sind und sich entlang dieser in der Regalgasse bewegen,
wobei die Regalfahrzeuge oder Regalbediengeräte (13,14) so betrieben werden, dass sie in einer Regalgasse überholen oder im Gegenverkehr aneinander vorbei fahren.

18. Verfahren nach Anspruch 17,
**dadurch gekennzeichnet, dass**
die Regalfahrzeuge oder Regalbediengeräte (13,14) beim Überholen oder der Vorbeifahrt in eine entsprechende Passierstellung gebracht werden.

## Claims

1. Rack vehicle for storing and retrieving articles in and from a shelf, comprising a chassis (69, 70) and a handling module (63, 84), wherein the rack vehicle (12, 15, 61, 62) can be moved by means of the chassis along a first axis, and wherein, with the handling module, objects can, along a loading and unloading direction of the handling module, be stored in the shelf (2, 3) and retrieved from the shelf and be received for transporting,
wherein the handling module (63, 84) is at least partially pivotably received in the chassis (69, 70) and is pivotable about a second axis, which is transverse to the first axis and transverse to a third axis along which the handling module loads and unloads the objects, such that the handling module (63, 84) with its loading and unloading position is pivotable between a position in which it is aligned along the first axis and at least a second position in which it is aligned along the third axis, wherein the chassis (69, 70) has a chassis width transverse to the first axis and transverse to the second axis and the handling module has a width transverse to the loading and unloading direction and a length along the loading and unloading direction,
**characterised in that**
the handling module (63, 84) is designed such that either the length of the handling module during aligning of the length along the third axis protrudes beyond the chassis width in all operating modes whereas, in the at least second possible position or alignment, at most only the chassis width is taken up, or that the handling module (63, 84) in one position or alignment corresponds to the chassis width and that the width or length of the handling module (63, 84) in the at least one second position or alignment has smaller dimensions in the direction of the chassis width than the chassis width.

2. Rack vehicle according to claim 1,
**characterised in that**
the width of the handling module (63, 84) corresponds essentially to the chassis width.

3. Rack vehicle according to any of the preceding claims,
**characterised in that**
the handling module (63, 84) is movably received in the chassis along the second axis, such that the handling module (63, 84) can reach any location of a plane spanned by the first and second axes and wherein the chassis comprises a guide arrangement (67, 68), along which the handling module in the chassis (69, 70) is movable along the second axis.

4. Storage and retrieval device for storing and retrieving objects in and from a shelf, said device having a chassis (18, 20; 21, 23) and a handling module (19,22),wherein the storage and retrieval device can be moved along a first axis by means of the chassis and wherein, with the handling module, objects can be stored in the shelf (2, 3) and retrieved from the shelf and be received for transporting, and wherein the handling module is movably received in the chassis and can be moved along a second axis, which is transverse to the first axis and transverse to a third axis along which the handling module loads and unloads the objects, such that the handling module can reach any location of an area spanned by the first and second axis, wherein the chassis comprises a chassis base (18, 21) and a guide arrangement (20, 23), along which the handling module in the chassis can be moved along the second axis, and wherein the chassis base serves to move along the first axis and has a chassis width transverse to the first axis and transverse to the second axis,
**characterised art that**
the guide arrangement is fixedly disposed at the chassis base and eccentrically to the centre of the chassis width and is telescopic.

5. Storage and retrieval device according to claim 4 or rack vehicle according to claim 3,
**characterised in that**
the guide arrangement (20, 23; 67, 68) extends only over part of the chassis width, in particular at most over half the chassis width and/or that the guide arrangement (20, 23; 67, 68) is disposed in a half of the chassis, with respect to the chassis width, that lies at the edge of the chassis.

6. Rack vehicle according to any of claims 3 or 5,
**characterised in that**
the guide arrangement (20, 23; 67, 68) is telescopic.

7. Storage and retrieval device according to any of claims 4 to 5,
**characterised in that**
the handling module (19, 22) is at least partially pivotably received in the chassis (18, 20; 21, 23) and can be pivoted about a second axis, which is transverse to the first axis and transverse to a third axis along which the handling module loads and unloads the objects, such that the handling module with its loading and unloading device is pivotable between a position in which it is aligned along the first axis and a position in which it is aligned along the third axis.

8. Rack vehicle according to any of claims 1 to 3 or 5 to 6, or storage and retrieval device according to any of claims 4 to 5 or 7,
**characterised in that**
the chassis base and/or the chassis (18, 20; 69, 70) has a frame or plate-shaped construction, which extends in their largest dimensions substantially parallel with a plane spanned by the first and the third axes and/or has supports, in particular in the form of wheels, of which at least two each are spaced apart from one another along the first and/or third axis.

9. Rack vehicle according to claim 3 or 5 to 6 or 8, or storage and retrieval device according to any of claims 4 to 5 or 7 to 8, **characterised in that,**
the guide arrangement (20, 23; 67, 68) is disposed with its largest dimension along the second axis transversely to the chassis base, and in particular transversely to a plane spanned by supports on the chassis base.

10. Rack vehicle according to any of claims 1 to 3 or 5 to 6 or 8 to 9, or storage and retrieval device according to any of claims 4 to 5 or 7 to 9,
**characterised in that**
the chassis base and/or the chassis (18, 20; 69, 70) has at least three supports, of which at least two are spaced apart along the first axis and at least two along the third axis and/or define a bearing plane which is parallel with a plane spanned by the first and third axis or is inclined opposite to this by a maximum of ± 45 DEG.

11. Rack vehicle according to any of claims 1 to 3 or 5 to 6 or 8 to 10, or storage and retrieval device according to any of claims 4 to 5 or 7 to 10,
**characterised in that**
the handling module (19, 22; 63, 84) protrudes or can protrude over the guide arrangement in the direction of the chassis width.

12. Warehouse for the storage of objects with at least two opposing racks (2, 3) which between them form a rack aisle (6), and with at least two rack vehicles or storage and retrieval devices (13, 14) for storing and retrieving objects in and from the racks, wherein the one or more rack vehicles according to any of claims 1 to 3 or 5 to 6 or 8 to 11 and the one or more storage and retrieval devices are configured according to any of claims 4 to 5 or 7 to 11, wherein the rack vehicles or storage and retrieval devices are mounted in at least one plane spanned by the distance between the racks and their longitudinal side and/or a plane parallel thereto and can move along this in the aisle,
wherein two rack vehicles or storage and retrieval devices can pass by each other in the aisle, wherein, in the direction of the width of the storage aisle defined by the distance between opposing shelves, they are configured such that they can be at least partially disposed adjacent to one another.

13. Warehouse according to claim 12,
**characterised in that**
the storage and retrieval devices (13, 14) can be moved in rail arrangements (28), one rail of each of which is disposed at one of the opposing racks (2, 3) and/or that
provided are one each of a storage and retrieval device (14) suspended with a chassis base on the top side of the chassis and a storage and retrieval device (1, 3) standing with a chassis base on the bottom side of the chassis.

14. Warehouse according to any of claims 12 or 13,
**characterised in that**
the rack vehicle or the storage and retrieval device (13, 14) can serve each of the two opposing racks (2, 3) and/or that the rack vehicle or the storage and retrieval device (13, 14) can receive objects along the full depth of the shelf.

15. Warehouse according to any of claims 12 to 14,
**characterised in that**
a rack (2, 3) can be served from two rack sides by rack vehicles or storage and retrieval devices (13, 14) and/or that a plurality of rack vehicles or storage and retrieval devices (13, 14) are disposed one above the other in a storage aisle.

16. Warehouse according to any of claims 12 to 15,
**characterised in that**
a rack (2, 3) has a plurality of shelves, which are disposed side by side in shelf levels, wherein several shelf levels are disposed one above the other, wherein a rack vehicle or storage and retrieval device (13, 14) can serve shelves in more than 5, preferably more than 10, especially more than 20 shelf levels and/or can serve shelves over a range of more than half of the rack height, in particular more than 75% of the rack height, preferably over the entire rack height.

17. Method for operating a warehouse, in particular a warehouse according to any of claims 12 to 16, with at least two racks (2,3), which are located opposite each other and between them form a rack aisle (6), wherein, in the method, objects can be stored in and retrieved from a shelf with at least two rack vehicles according to any of claims 1 to 3 or 5 to 6 or 8 to 11 and/or at least two storage and retrieval devices (13, 14) according to any of claims 4 to 5 or 7 to 11, wherein the rack vehicles or storage and retrieval devices (13, 14) are mounted in at least one plane spanned by the distance between the racks and their longitudinal side and/or a plane parallel thereto and move along these in the rack aisle,
wherein the rack vehicles or storage and retrieval devices (13, 14) are operated such that they overtake each other or pass by each other as in oncoming traffic.

18. Method of claim 17,
**characterised in that**
the rack vehicles or storage and retrieval devices (13, 14) are brought into a corresponding passing position when overtaking or moving past each other.

## Revendications

1. Véhicule pour rayonnages pour entrer en stock et reprendre du stock des objets dans et à partir d'un rayonnage, véhicule qui présente un châssis (69, 70) et un module de manipulation (63, 84), cependant que le véhicule pour rayonnages (12, 15, 61, 62) peut être déplacé au moyen du châssis le long d'un premier axe et cependant que des objets peuvent être entrés en stock dans le rayonnage et repris du stock du rayonnage avec le module de manipulation le long d'une direction de chargement et de déchargement du module de manipulation et peuvent être reçus pour le transport, cependant que le module de manipulation (63, 84) est logé dans le châssis (69, 70) en étant au moins partiellement pivotant et peut pivoter autour d'un second axe qui est transversal par rapport au premier axe et transversal par rapport à un troisième axe le long duquel le module de manipulation prend et délivre les objets si bien que le module de manipulation (63, 84) est pivotant, avec son sens de chargement et de déchargement, entre une position dans laquelle il est orienté le long du premier axe et au moins une seconde position dans laquelle il est orienté le long du troisième axe, cependant que le châssis (69, 70) présente une largeur de châssis transversalement par rapport au premier axe et transversalement par rapport au second axe et que le module de manipulation présente une largeur transversalement par rapport au sens de chargement et de déchargement et une longueur le long du sens de chargement et de déchargement, **caractérisé en ce que** le module de manipulation (63, 84) est configuré de telle manière que soit la longueur du module de manipulation fait saillie au-delà de la largeur du châssis dans chaque état de fonctionnement, pour une orientation de la longueur le long du troisième axe, tandis qu'au maximum la largeur de châssis est sollicitée dans la seconde position possible qui existe au moins, soit le module de manipulation (63, 84) correspond, dans une position ou une orientation, à la largeur du châssis et que la largeur ou la longueur du module de manipulation (63, 84) est dimensionnée, dans la seconde position qui existe au moins ou orientation, plus petite que la largeur du châssis en direction de la largeur du châssis.

2. Véhicule pour rayonnages selon la revendication 1, **caractérisé en ce que** la largeur du module de manipulation (63, 84) correspond substantiellement à la largeur du châssis.

3. Véhicule pour rayonnages selon l'une des revendications précédentes, **caractérisé en ce que** le module de manipulation (63, 84) est logé dans le châssis déplaçable le long du second axe si bien que le module de manipulation (63, 84) peut atteindre n'importe quel endroit d'une surface couverte par le premier et le second axe et cependant que le châssis comprend un dispositif de guidage (67, 68) le long duquel le module de manipulation est déplaçable dans le châssis (69, 70) le long du second axe.

4. Transstockeur pour entrer en stock et reprendre du stock des objets dans et à partir d'un rayonnage qui présente un châssis (18, 20 ; 21, 23) et un module de manipulation (19, 22), cependant que le transstockeur est déplaçable au moyen du châssis le long d'un premier axe et cependant que des objets peuvent être entrés en stock dans le rayonnage (2, 3) avec le module de manipulation et repris du stock du rayonnage et peuvent être reçus pour le transport et cependant que le module de manipulation est logé déplaçable dans le châssis et est déplaçable le long d'un second axe qui est transversal par rapport au premier axe et transversal par rapport à un troisième axe le long duquel le module de manipulation prend et délivre les objets si bien que le module de manipulation peut atteindre n'importe quel endroit d'une surface couverte par le premier et le second axe, cependant que le châssis comprend une base de châssis (18, 21) et un dispositif de guidage (20, 23) le long duquel le module de manipulation est déplaçable dans le châssis le long du second axe et cependant que la base du châssis sert au déplacement le long du premier axe et présente une largeur de châssis transversalement par rapport au premier axe et transversalement par rapport au second axe, **caractérisé en ce que** le dispositif de guidage est placé de manière fixe sur la base de châssis en étant excentré par rapport au milieu de la largeur du châssis et est télescopique.

5. Transstockeur selon la revendication 4 ou véhicule pour rayonnages selon la revendication 3, **caractérisé en ce que** le dispositif de guidage (20, 23 ; 67, 68) s'étend seulement sur une partie de la largeur du châssis, en particulier au maximum sur la moitié de la largeur du châssis et/ou que le dispositif de guidage (20, 23 ; 67, 68) est placé dans une moitié du châssis par rapport à la largeur du châssis qui est située sur le bord du châssis.

6. Véhicule pour rayonnages selon l'une des revendications 3 ou 5, **caractérisé en ce que** le dispositif de guidage (20, 23 ; 67, 68) est télescopique.

7. Transstockeur selon l'une des revendications 4 à 5, **caractérisé en ce que** le module de manipulation (19, 22) est logé pivotant au moins partiellement dans le châssis (18, 20 ; 21, 23) et est pivotant autour d'un second axe qui est transversal par rapport au premier axe et transversal par rapport à un troisième axe le long duquel le module de manipulation prend et délivre les objets si bien que le module de manipulation est pivotant, avec son sens de chargement et de déchargement, entre une position dans laquelle il est orienté le long du premier axe et une position dans laquelle il est orienté le long du troisième axe.

8. Véhicule pour rayonnages selon l'une des revendications 1 à 3 ou 5 à 6 ou transstockeur selon l'une des revendications 4 à 5 ou 7, **caractérisé en ce que** la base du châssis ou le châssis (18, 20 ; 69, 70) présente une construction en forme de cadre ou de plaque qui s'étend, dans ses plus grandes dimensions, substantiellement parallèlement à un plan couvert par le premier et le troisième axe et/ou présente des appuis, en particulier sous forme de roues dont au moins deux sont espacées respectivement l'une de l'autre le long du premier et/ou du troisième axe.

9. Véhicule pour rayonnages selon la revendication 3 ou 5 à 6 ou 8 ou transstockeur selon l'une des revendications 4 à 5 ou 7 à 8, **caractérisé en ce que** le dispositif de guidage (20, 23 ; 67, 68) est placé avec sa plus grande dimension le long du second axe transversalement par rapport à la base du châssis et en particulier transversalement par rapport à un plan couvert par les appuis sur la base du châssis.

10. Véhicule pour rayonnages selon l'une des revendications 1 à 3 ou 5 à 6 ou 8 à 9 ou transstockeur selon l'une des revendications 4 à 5 ou 7 à 9, **caractérisé en ce que** la base du châssis ou le châssis (18, 20 ; 69, 70) présente au moins trois appuis dont au moins deux sont espacés le long du premier axe et au moins deux le long du troisième axe et/ou qui définissent un plan d'appui qui est parallèle à un plan couvert par le premier et le troisième axe ou qui est incliné de ± 45° maximum par rapport à celui-ci.

11. Véhicule pour rayonnages selon l'une des revendications 1 à 3 ou 5 à 6 ou 8 à 10 ou transstockeur selon l'une des revendications 4 à 5 ou 7 à 10, **caractérisé en ce que** le module de manipulation (19, 22 ; 63, 84) fait saillie ou peut faire saillie du dispositif de guidage en direction de la largeur du châssis.

12. Entrepôt pour entreposer des objets avec au moins deux rayonnages (2, 3) se faisant face qui forment une allée (6) entre eux et avec au moins deux véhicules pour rayonnages ou transstockeurs (13, 14) pour mettre en stock et reprendre du stock des objets dans et hors des rayonnages, cependant que le ou les véhicules pour rayonnages sont configurés selon l'une des revendications 1 à 3 ou 5 à 6 ou 8 à 11 et le ou les transstockeurs sont configurés selon l'une des revendications 4 à 5 ou 7 à 11, cependant que les véhicules pour rayonnages ou les transstockeurs sont entreposés dans au moins un plan couvert par la distance des rayonnages et de leur côté longitudinal et/ou un plan parallèle à celui-ci et qu'ils peuvent se déplacer le long de celui-ci dans l'allée, cependant que deux véhicules pour rayonnages ou transstockeurs peuvent passer l'un devant l'autre dans l'allée, cependant qu'ils sont configurés dans la direction de la largeur de l'allée de l'entrepôt qui est définie par la distance entre les rayonnages se faisant face de telle manière qu'ils peuvent être placés au moins partiellement l'un à côté de l'autre.

13. Entrepôt selon la revendication 12, **caractérisé en ce que** les transstockeurs (13, 14) sont déplaçables dans des dispositifs à rails (28) dont respectivement un rail est placé sur l'un des rayonnages se faisant face (2, 3) et/ou que respectivement un transstockeur (14) est prévu suspendu avec une base de châssis sur le côté supérieur du châssis et un transstockeur (13) est prévu debout avec une base de châssis sur le côté inférieur du châssis.

14. Entrepôt selon l'une des revendications 12 ou 13, **caractérisé en ce que** le véhicule pour rayonnages ou le transstockeur (13, 14) peut desservir chacun des deux rayonnages se faisant face (2, 3) et/ou que le véhicule pour rayonnages ou le transstockeur (13, 14) peut prendre des objets dans toute la profondeur du compartiment de rayonnage.

15. Entrepôt selon l'une des revendications 12 à 14, **caractérisé en ce qu'**un rayonnage (2, 3) peut être desservi par des véhicules pour rayonnages ou des transstockeurs (13, 14) de deux côtés de rayonnages et/ou que plusieurs véhicules pour rayonnages ou transstockeurs (13, 14) sont placés l'un au-dessus de l'autre dans une allée de l'entrepôt.

16. Entrepôt selon l'une des revendications 12 à 15, **caractérisé en ce qu'**un rayonnage (2, 3) présente une multitude de compartiments de rayonnages qui sont placés les uns à côté des autres dans des plans de compartiments de rayonnages, cependant que plusieurs plans de compartiments de rayonnages sont placés l'un au-dessus de l'autre, cependant qu'un véhicule pour rayonnages ou un transstockeur (13, 14) peut desservir des compartiments de rayonnages dans plus de 5, de préférence dans plus de 10, en particulier dans plus de 20 plans de compartiments de rayonnages et/ou des compartiments de rayonnages dans une zone de plus de la moitié de la hauteur du rayonnage, en particulier de plus de 75% de la hauteur du rayonnage, de préférence sur toute la hauteur du rayonnage

17. Procédé pour l'exploitation d'un entrepôt, en particulier d'un entrepôt selon l'une des revendications 12 à 16, avec au moins deux rayonnages (2, 3) qui se font face et qui forment une allée (6) entre eux, cependant que, pour le procédé, des objets sont entrés en stock dans un rayonnage ou repris du stock avec au moins deux véhicules pour rayonnages selon l'une des revendications 1 à 3 ou 5 à 6 ou 8 à 11 et/ou au moins deux transstockeurs (13, 14) selon l'une des revendications 4 à 5 ou 7 à 11, cependant que les véhicules pour rayonnages ou les transstockeurs (13, 14) sont entreposés dans au moins un plan couvert par la distance des rayonnages et de leur côté longitudinal et/ou un plan parallèle à celui-ci et se déplacent le long de celui-ci dans l'allée, cependant que les véhicules pour rayonnages ou les transstockeurs (13, 14) fonctionnent de telle manière qu'il se dépassent dans une allée ou passent l'un devant l'autre dans les deux sens de circulation.

18. Procédé selon la revendication 17, **caractérisé en ce que** les véhicules pour rayonnages ou les transstockeurs (13, 14) sont amenés, lors du dépassement ou du passage l'un devant l'autre, dans une position de passage correspondante.
